(19) Europäisches Patentamt
European Patent Office
Office européen des brevets

(11) EP 4 431 541 B1

(12) EUROPEAN PATENT SPECIFICATION

(45) Date of publication and mention of the grant of the patent:
**24.12.2025 Bulletin 2025/52**

(21) Application number: **22892414.8**

(22) Date of filing: **16.09.2022**

(51) International Patent Classification (IPC):
***C08G 14/06*** (2006.01) ***C09D 161/34*** (2006.01)
***C09D 163/00*** (2006.01) ***C08G 59/50*** (2006.01)

(52) Cooperative Patent Classification (CPC):
(C-Sets available)
**C08G 59/5033; C08G 14/06; C09D 161/34; C09D 163/00** (Cont.)

(86) International application number:
**PCT/JP2022/034664**

(87) International publication number:
**WO 2023/084913 (19.05.2023 Gazette 2023/20)**

(54) **EMULSION-TYPE EPOXY RESIN COMPOSITION, METHOD FOR PRODUCING SAME, AND COATING MATERIAL**

EMULSIONSARTIGE EPOXIDHARZZUSAMMENSETZUNG, VERFAHREN ZUR HERSTELLUNG DAVON UND BESCHICHTUNGSMATERIAL

COMPOSITION DE RÉSINE ÉPOXYDE DE TYPE ÉMULSION, SON PROCÉDÉ DE PRODUCTION ET MATÉRIAU DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.11.2021 JP 2021182812**

(43) Date of publication of application:
**18.09.2024 Bulletin 2024/38**

(73) Proprietor: **MITSUBISHI GAS CHEMICAL COMPANY, INC.**
**Chiyoda-ku**
**Tokyo 100-8324 (JP)**

(72) Inventors:
- **HARIU, Tomohiro**
  **Hiratsuka-shi, Kanagawa 254-0016 (JP)**
- **HANAOKA, Takuma**
  **Hiratsuka-shi, Kanagawa 254-0016 (JP)**
- **NISHIMOTO, Natsumi**
  **Hiratsuka-shi, Kanagawa 254-0016 (JP)**
- **KOUNO, Kazuki**
  **Hiratsuka-shi, Kanagawa 254-0016 (JP)**

(74) Representative: **Gille Hrabal Partnerschaftsgesellschaft mbB**
**Patentanwälte**
**Brucknerstraße 20**
**40593 Düsseldorf (DE)**

(56) References cited:
**WO-A1-2018/096868**
**WO-A1-2021/039512**
**CN-A- 111 286 255**
**JP-A- 2001 261 815**
**JP-A- 2011 252 131**
**JP-A- 2017 179 107**
**JP-A- H09 176 292**
**JP-A- S5 019 855**
**US-A1- 2019 256 645**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 163/00, C08L 61/34**

## Description

### Technical Field

The present invention relates to an emulsion-type epoxy resin composition, a method for producing the same, and a paint.

### Background Art

A polyamine compound, and a compound obtained by subjecting a polyamine compound and an alkenyl compound or the like to an addition reaction are known to be useful as an epoxy resin curing agent. An epoxy resin composition using such an epoxy resin curing agent has been widely used in paint fields such as a corrosion-resistant paint for ships, bridges, iron structures on land and sea, in civil engineering construction fields such as lining, reinforcement, crack repair materials, sealing materials, injection materials, primers, screeds, topcoats and FRP reinforcement of concrete structures, floor materials of buildings, lining of water supply and sewage systems, paving materials, and adhesives, in electrical and electronic fields such as die-attach materials and insulation sealants, and in fiber reinforced plastic fields.

Recently, in the paint fields, solvent regulations have been strengthened from an environment perspective and a safety perspective, and the move to water-based paints has been studied. Producing an epoxy resin paint as a water-based paint means using, as a main agent, a water-based epoxy resin emulsified by adding an emulsifier and water to an epoxy resin, for example. However, a problem is that a cured coating film of a water-based epoxy resin composition containing a water-based epoxy resin as a main agent and employing a hydrophilic epoxy resin curing agent does not have sufficient coating film properties such as water resistance, hardness, and appearance.

As a method for solving the above problem, for example, PTL 1 discloses the use of a curing agent for a water-based epoxy resin containing a reaction composition containing a product of reaction between styrene and a predetermined amine compound, and describes that a water-based epoxy resin composition using this curing agent has good curability and excellent coating film properties such as water resistance, hardness, and appearance. PTL 2 discloses a ketimine modified epoxy flexible emulsion and a preparation method thereof. PTL 3 discloses a water-based emulsion of a liquid epoxy resin (W2821R70 or JER 828) and GASKAMINE 240 (reaction product of styrene and meta-xylylenediamine) as a curing agent.

### Citation List

### Patent Literature

PTL 1: WO 2018/096868
PTL 2: CN 111 286 255 A
PTL 3: US 2019/256645 A1

## Summary of Invention

### Technical Problem

Among paints, corrosion-resistant paints for ships, bridges, and iron structures on land and sea are required to have high salt water resistance in order to suppress the occurrence of rust in seawater. However, the water-based epoxy resin composition disclosed in PTL 1 has room for improvement in terms of improving the salt water resistance of the cured product. Further, the epoxy resin and epoxy resin curing agent used in a water-based epoxy resin composition need to be stably emulsified and dispersed in water. However, the emulsifying properties of the epoxy resin composition may also depend on the combination of the epoxy resin and epoxy resin curing agent with the emulsifier.

A problem to be solved by the present invention is to provide an emulsion-type epoxy resin composition that has good emulsifying properties and excellent appearance, water resistance, and salt water resistance when used for a coating film, a method for producing the same, and a paint.

### Solution to Problem

The present inventors have found that an emulsion-type epoxy resin composition containing an epoxy resin, a

predetermined epoxy resin curing agent, an alkylene oxide adduct of a (modified) aromatic hydrocarbon formaldehyde resin, and water may solve the above problem.

The present invention is as defined in the claims.

Advantageous Effects of Invention

According to the present invention, it is possible to provide an emulsion-type epoxy resin composition that has good emulsifying properties and excellent appearance, water resistance, and salt water resistance when used for a coating film, and a method for producing the same. This epoxy resin composition can be suitably used in various paints, such as a corrosion-resistant paint.

Description of Embodiments

[Emulsion-type epoxy resin composition]

The emulsion-type epoxy resin composition of the present invention (hereinafter also simply referred to as "epoxy resin composition" or "composition of the present invention") contains an epoxy resin (A) (hereinafter also simply referred to as "component (A)"), an epoxy resin curing agent (B) containing an aromatic ring-containing polyamine compound or a modified product thereof (hereinafter also simply referred to as "epoxy resin curing agent (B)" or "component (B)"), at least one resin (C) selected from the group consisting of an alkylene oxide adduct of an aromatic hydrocarbon formaldehyde resin and an alkylene oxide adduct of a modified aromatic hydrocarbon formaldehyde resin (hereinafter also simply referred to as "resin (C)" or "component (C)"), and water.

By having the above constituents, the composition of the present invention has good emulsifying properties and excellent appearance, water resistance, and salt water resistance when used for a coating film. The reason for this is not certain, but it is thought to be as follows.

The composition of the present invention contains an epoxy resin curing agent (B) containing an aromatic ring-containing polyamine compound or a modified product thereof. Since the aromatic ring-containing polyamine compound has high hydrophobicity and crystallinity, it is thought that this enables a coating film having excellent water resistance and salt water resistance to be formed.

The resin (C) has a hydrophobic site derived from an aromatic hydrocarbon formaldehyde resin or a modified aromatic hydrocarbon formaldehyde resin and a hydrophilic site derived from a (poly)alkylene oxide structure, and acts as an emulsifier. The resin (C) has a structure derived from an aromatic hydrocarbon, and has a wide molecular weight distribution, and so it is thought that these points enable a coating film having high emulsifying properties with respect to the epoxy resin (A) and the epoxy resin curing agent (B) used in the present invention and having good appearance and water resistance to be formed.

Each component used in the composition of the present invention is described below.

<Epoxy resin (A)>

The epoxy resin (A) is not particularly limited as long as it has two or more glycidyl groups that can react with an active hydrogen in the epoxy resin curing agent (B), which is described later, and can be emulsified and dispersed in water. The epoxy resin (A) may be any of a saturated or unsaturated aliphatic compound, an alicyclic compound, an aromatic compound, and a heterocyclic compound. From the viewpoint of the emulsifying properties of the resin (C), and from the viewpoint of forming a coating film having excellent appearance, water resistance, and salt water resistance, the epoxy resin (A) is preferably an epoxy resin containing an aromatic ring or an alicyclic structure in the molecule.

Specific examples of the epoxy resin include at least one epoxy resin selected from the group consisting of an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or a glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from phenol novolac, and an epoxy resin having a glycidyloxy group derived from resorcinol. These epoxy resins can also be used in combination of two or more thereof.

Among the above, from the viewpoint of the emulsifying properties of the resin (C) and the viewpoint of forming a coating film having excellent appearance, water resistance, and salt water resistance, the epoxy resin (A) preferably has as a main component at least one selected from the group consisting of an epoxy resin having a glycidylamino group derived from metaxylylenediamine, an epoxy resin having a glycidylamino group derived from paraxylylenediamine, an

epoxy resin having a glycidyloxy group derived from bisphenol A, and an epoxy resin having a glycidyloxy group derived from bisphenol F, and from the viewpoint of the emulsifying properties of the resin (C), the viewpoint of forming a coating film having excellent appearance, water resistance, and salt water resistance, and the viewpoint of availability and economy, the epoxy resin (A) more preferably has as a main component an epoxy resin having a glycidyloxy group derived from bisphenol A.

As used herein, "main component" means that other components may be included and the main component is preferably from 50 to 100% by mass, more preferably from 70 to 100% by mass, and further preferably from 90 to 100% by mass, of the whole.

An epoxy equivalent weight of the epoxy resin (A) is, from the viewpoint of forming a coating film having excellent appearance, water resistance, and salt water resistance, preferably 80 g/eq or more, more preferably 100 g/eq or more, further preferably 120 g/eq or more, and still further preferably 150 g/eq or more, and from the viewpoint of low viscosity and curability of the obtained epoxy resin composition, preferably 1000 g/eq or less, more preferably 800 g/eq or less, further preferably 500 g/eq or less, and still further preferably 300 g/eq or less.

<Epoxy resin curing agent (B)>

The epoxy resin curing agent (B) contains an aromatic ring-containing polyamine compound or a modified product thereof.

(Aromatic ring-containing polyamine compound)

Examples of the aromatic ring-containing polyamine compound include at least one selected from the group consisting of an aliphatic polyamine containing an aromatic ring and an aromatic polyamine. The aromatic ring-containing polyamine compound may have two or more amino groups, preferably from 2 to 5, more preferably from 2 to 4, and further preferably 2 or 3. Still further preferably, the aromatic ring-containing polyamine compound is an aromatic ring-containing diamine having two amino groups.

Examples of the aliphatic polyamine containing an aromatic ring include o-xylylenediamine, m-xylylenediamine (metaxylylenediamine; MXDA), p-xylylenediamine (paraxylylenediamine; PXDA), and the like.

Examples of the aromatic polyamine include 4,4'-diaminodiphenyl ether, 3,4'-diaminodiphenyl ether, 3,3'-diaminodiphenyl ether, 4,4'-diaminodiphenyl sulfide, 3,4'-diaminodiphenyl sulfide, 3,3'-diaminodiphenyl sulfide, 4,4'-diaminodiphenyl sulfone, 3,4'-diaminodiphenyl sulfone, 3,3'-diaminodiphenyl sulfone, 4,4'-diaminodiphenyl ketone, 3,4'-diaminodiphenyl ketone, 3,3'-diaminodiphenyl ketone, 2,2-bis(4-aminophenyl)propane, 2,2-bis(3-aminophenyl)propane, 2,2-bis(4-aminophenyl)hexafluoropropane, 2,2-bis(3-aminophenyl)hexafluoropropane, 1,4-bis(4-aminophenoxy)benzene, 1,3-bis(4-aminophenoxy)benzene, 1,4-bis(3-aminophenoxy)benzene, 1,3-bis(3-aminophenoxy)benzene, bis[4-(4-aminophenoxy)phenyl]ether, bis[4-(3-aminophenoxy)phenyl]ether, bis[4-(4-aminophenoxy)phenyl]sulfide, bis[4-(3-aminophenoxy)phenyl]sulfide, bis[4-(4-aminophenoxy)phenyl]sulfone, bis[4-(3-aminophenoxy)phenyl]sulfone, 2,2-bis[4-(4-aminophenoxy)phenyl]propane, 2,2-bis[4-(3-aminophenoxy)phenyl]propane, 2,2-bis[4-(4-aminophenoxy)phenyl]hexafluoropropane, 2,2-bis[4-(3-aminophenoxy)phenyl]hexafluoropropane, and the like.

One type or two or more types of the aromatic ring-containing polyamine compound can be used. Among the above examples, from the viewpoint of the emulsifying properties of the resin (C) and the viewpoint of forming a coating film having excellent appearance, water resistance, and salt water resistance, the aromatic ring-containing polyamine compound is preferably an aliphatic polyamine containing an aromatic ring, and is more preferably a polyamine compound (b1) represented by the following formula (1):

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

(Modified product of aromatic ring-containing polyamine compound)

Examples of the modified product of the aromatic ring-containing polyamine compound include a Mannich reaction product of a phenolic compound, an aldehyde compound, and an aromatic ring-containing polyamine compound; a reaction product of an unsaturated hydrocarbon compound and an aromatic ring-containing polyamine compound; a reaction product of an epoxy compound having at least one epoxy group and an aromatic ring-containing polyamine compound; a reaction product of a carboxylic acid or a derivative thereof and an aromatic ring-containing polyamine compound; and the like.

Among the above, from the viewpoint of the emulsifying properties of the resin (C) and the viewpoint of forming a coating film having excellent appearance, water resistance, and salt water resistance, the modified product of an aromatic

ring-containing polyamine compound is preferably at least one selected from the group consisting of a Mannich reaction product of a phenolic compound, an aldehyde compound, and an aromatic ring-containing polyamine compound and a reaction product of an unsaturated hydrocarbon compound and an aromatic ring-containing polyamine compound.

As used herein, "reaction product of X and Y" not only refers to a product of reaction between X and Y (adduct), but also by-products other than such a product and unreacted raw materials X, Y, and the like. The same applies to "Mannich reaction product of X, Y, and Z."

Examples of the phenolic compound used in the Mannich reaction product of a phenolic compound, an aldehyde compound, and an aromatic ring-containing polyamine compound include naturally occurring phenolic compounds such as phenol, alkylphenol, alkenylphenol, terpenephenol, and cardanol. From the viewpoint of the emulsifying properties of the resin (C) and the viewpoint of forming a coating film having excellent appearance, water resistance, and salt water resistance, the number of carbon atoms in the alkyl group in the alkylphenol is preferably from 1 to 24, and more preferably from 1 to 18, and the number of carbon atoms in the alkenyl group in the alkenylphenol is preferably from 2 to 24, and more preferably 2 to 18.

Specific examples of the phenolic compound include phenol, cresol, ethylphenol (p-ethylphenol, etc.), isopropylphenol (o-isopropylphenol, p-isopropylphenol, etc.), butylphenol (p-tert-butylphenol, p-sec-butylphenol, o-tert-butylphenol, o-sec-butylphenol, etc.), amylphenol (p-tert-amylphenol, o-tert-amylphenol, etc.), p-octylphenol, nonylphenol, p-cumylphenol, decylphenol, undecylphenol, p-dodecylphenol, tridecylphenol, tetradecylphenol, pentadecylphenol, pentadecenylphenol, pentadecadienylphenol, pentadecatrienylphenol, hexadecylphenol, heptadecylphenol, octadecylphenol, octadecenylphenol, terpene phenol, and cardanol. These can be used alone or in combination of two or more.

Among the above, from the viewpoint of reactivity with the aromatic ring-containing polyamine compound, the viewpoint of the emulsifying properties of the resin (C) of the obtained reaction product, and the viewpoint of forming a coating film having excellent appearance, water resistance, and salt water resistance, the phenolic compound used in the Mannich reaction product is preferably at least one selected from the group consisting of phenol, cresol, p-tert-butylphenol, nonylphenol, and cardanol, and is more preferably phenol.

Examples of the aldehyde compound used in the Mannich reaction product include formaldehyde; a formaldehyde-releasing compound such as trioxane and paraformaldehyde; and other aldehydes such as benzaldehyde. Among these, at least one selected from the group consisting of formaldehyde and a formaldehyde-releasing compound is preferred. Among these, from the viewpoint of usability in the Mannich reaction, it is more preferable to use an aqueous formaldehyde solution.

The unsaturated hydrocarbon compound used in the reaction product of an unsaturated hydrocarbon compound and an aromatic ring-containing polyamine compound is, from the viewpoint of reactivity with the aromatic ring-containing polyamine compound, the viewpoint of the emulsifying properties of the resin (C) of the obtained reaction product, and the viewpoint of forming a coating film having excellent appearance, water resistance, and salt water resistance, preferably an unsaturated hydrocarbon compound having from 2 to 10 carbon atoms.

Examples of the unsaturated hydrocarbon compound include an unsaturated aliphatic hydrocarbon compound having from 2 to 10 carbon atoms and an aromatic hydrocarbon compound having from 2 to 10 carbon atoms and an ethylenically unsaturated bond, and include, for example, at least one selected from the group consisting of ethylene, propylene, butene, pentene, hexene, heptene, octene, nonene, decene, isobutylene, 2-pentene, 3-methyl-1-butene, 2-methyl-2-butene, 2,3-dimethyl-2-butene, cyclohexene, cyclohexadiene, styrene, and divinylbenzene.

Among these, from the viewpoint of the emulsifying properties of the resin (C) of the obtained reaction product and the viewpoint of forming a coating film having excellent appearance, water resistance, and salt water resistance, an aromatic hydrocarbon compound having an ethylenically unsaturated bond, such as styrene and divinylbenzene, is preferred, and styrene is more preferred.

The aromatic ring-containing polyamine compound or modified product thereof used in the present invention is more preferably at least one selected from the group consisting of a polyamine compound (b1) represented by the following formula (1), a Mannich reaction product (b2) of a phenolic compound, an aldehyde compound, and the polyamine compound represented by the following formula (1), and a reaction product (b3) of styrene and the polyamine compound represented by the following formula (1), and from the viewpoint of forming a coating film having excellent appearance, water resistance, and salt water resistance, is further preferably at least one selected from the group consisting of a Mannich reaction product (b2) of a phenolic compound, an aldehyde compound, and the polyamine compound represented by the following formula (1) and a reaction product (b3) of styrene and the polyamine compound represented by the following formula (1):

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

[Polyamine compound (b1) represented by formula (1)]

The component (b1) is a polyamine compound represented by the above formula (1).

In the formula (1), A is preferably a 1,3-phenylene group or a 1,4-phenylene group, and more preferably a 1,3-phenylene group. That is, the polyamine compound (b1) is one or more xylylenediamines selected from the group consisting of o-xylylenediamine, m-xylylenediamine (metaxylylenediamine; MXDA), and p-xylylenediamine (paraxylylenediamine; PXDA), preferably one or more selected from the group consisting of metaxylylenediamine and paraxylylenediamine, and more preferably metaxylylenediamine.

[Mannich reaction product (b2) of a phenolic compound, an aldehyde compound, and a polyamine compound represented by formula (1)]

The Mannich reaction product (b2) is a Mannich reaction product of a phenolic compound, an aldehyde compound, and a polyamine compound represented by the above formula (1).

The phenolic compound used in the Mannich reaction product (b2) and its preferred mode are the same as described above. At least one selected from the group consisting of phenol, cresol, p-tert-butylphenol, nonylphenol, and cardanol is preferred, and phenol is more preferred.

The aldehyde compound used in the Mannich reaction product (b2) and its preferred mode are the same as described above. At least one selected from the group consisting of formaldehyde and a formaldehyde-releasing compound is preferred, and it is more preferred to use an aqueous formaldehyde solution.

The polyamine compound represented by the above formula (1) used in the Mannich reaction product (b2) and its preferred mode are the same as described above. One or more selected from the group consisting of metaxylylenediamine and paraxylylenediamine is preferred, and metaxylylenediamine is more preferred.

That is, the Mannich reaction product (b2) is further preferably a Mannich reaction product of phenol, formaldehyde, and metaxylylenediamine.

The method for producing the Mannich reaction product (b2) is not particularly limited, and any known method can be used. For example, an aldehyde compound or a solution thereof is added dropwise to a mixture of the polyamine compound represented by the above formula (1) (hereinafter also referred to as "raw material polyamine") and the phenolic compound, preferably at 80°C or lower, and more preferably at 60°C or lower. After the addition is complete, the temperature is raised to preferably from 80 to 180°C, more preferably 90 to 150°C, and the reaction is carried out for from 1 to 10 hours while removing the distillate from the reaction system.

The amounts of the phenolic compound, aldehyde compound, and raw material polyamine used in the Mannich reaction are not particularly limited as long as the ratio is such that resulting reaction product contains an amino group having an active hydrogen. However, the following ranges are preferred.

The phenolic compound is preferably used in a range of 0.3 to 2 mol, and more preferably 0.5 to 1.5 mol, with respect to 1 mol of the raw material polyamine. If the amount of the phenolic compound used with respect to 1 mol of the raw material polyamine is 0.3 mol or more, the resulting coating film has a good appearance, and if the amount is 2 mol or less, curability as the epoxy resin curing agent in the Mannich reaction product (b2) is good.

The aldehyde compound is used in a range of preferably 0.3 to 2 mol, and more preferably 0.5 to 1.5 mol, with respect to 1 mol of the raw material polyamine. If the amount of the aldehyde compound used with respect to 1 mol of the raw material polyamine is 0.3 mol or more, the addition reaction proceeds sufficiently, and if the amount is 2 mol or less, the viscosity of the resulting reaction product does not increase too much and usability is good.

The active hydrogen equivalent weight (hereinafter also referred to as "AHEW") of the Mannich reaction product (b2) is, from the viewpoint of exhibiting good curing performance even if the amount blended in the epoxy resin composition is small, preferably 130 or less, more preferably 120 or less, and further preferably 110 or less, and from the viewpoint of ease of manufacture and the like, the AHEW is preferably 70 or more.

The AHEW of the Mannich reaction product (b2) can be determined, for example, by a titration method.

[Reaction product (b3) of styrene and a polyamine compound represented by formula (1)]

The reaction product (b3) is a reaction product of styrene and a polyamine compound represented by the above formula (1).

The polyamine compound represented by the above formula (1) and its preferred mode are the same as described above, and is preferably one or more selected from the group consisting of metaxylylenediamine and paraxylylenediamine, and more preferably metaxylylenediamine.

From the viewpoint of the emulsifying properties of the resin (C) and the viewpoint of forming a coating film having excellent appearance, water resistance, and salt water resistance, the reaction product (b3) preferably contains 10% by mass or more of a compound represented by the following formula (2).

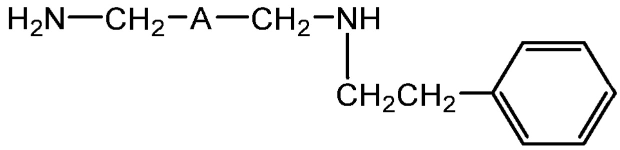

(2)

wherein A is the same as described above.

The compound represented by the above formula (2) is, among the reaction products of styrene and a polyamine compound (raw material polyamine) represented by the above formula (1), a product of reaction in which 1 mol of styrene and 1 mol of raw material polyamine are added (hereinafter this product is also referred to as "1:1 adduct").

The reaction product (b3) may contain, in addition to the 1:1 adduct of styrene and raw material polyamine, which is a compound represented by the above formula (2), multi-adducts such as a 2:1 adduct, a 3:1 adduct, and a 4:1 adduct of styrene and the raw material polyamine. However, among these adducts, the 1:1 adduct of styrene and the raw material polyamine has the lowest active hydrogen equivalent weight. The active hydrogen equivalent weight (AHEW) is the molecular weight per 1 equivalent weight of active hydrogen that can react with the epoxy resin, which is the main agent of the epoxy resin composition. Therefore, an epoxy resin curing agent in which the reaction composition (b3) containing the compound represented by the above formula (2) as a main component is used can exhibit a good curing performance even if the amount blended in the epoxy resin composition is small.

From the viewpoint of obtaining the above effects, the content of the compound represented by the above formula (2) in the reaction product (b3) is more preferably 20% by mass or more, further preferably 30% by mass or more, and still further preferably 45% by mass or more, and is 100% by mass or less.

The content of the compound represented by the above formula (2) in the reaction product (b3) can be determined by gas chromatography (GC) analysis.

The active hydrogen equivalent weight (AHEW) of the reaction product (b3) is, from the viewpoint of exhibiting a good curing performance even if the amount blended in the epoxy resin composition is small, preferably 130 or less, more preferably 120 or less, and further preferably 110 or less, and from the viewpoint of ease of manufacture and the like, the AHEW is preferably 80 or more, and more preferably 90 or more.

The AHEW of the reaction product (b3) can be determined by the same method as described above.

The reaction product (b3) is obtained by an addition reaction between styrene and the polyamine compound represented by the above formula (1). The addition reaction can be carried out by a known method.

Further, as the reaction product (b3), a commercially available product such as "Gaskamine 240" manufactured by Mitsubishi Gas Chemical Company, Inc. can also be used.

The aromatic ring-containing polyamine compound or modified product thereof can be used alone or in combination of two or more.

From the viewpoint of more effectively obtaining the effects of the present invention, the content of the aromatic ring-containing polyamine compound or modified product thereof in the epoxy resin curing agent (B) is preferably 30% by mass or more, more preferably 50% by mass or more, further preferably 70% by mass or more, still further preferably 85% by mass or more, still further preferably 90% by mass or more, and still further preferably 95% by mass or more, and is 100% by mass or less.

(Other curing agent components)

The epoxy resin curing agent (B) may further contain other curing agent components other than the aromatic ring-containing polyamine compound or modified product thereof. Examples of "other curing agent components" include aliphatic polyamine compounds or modified products thereof other than an aromatic ring-containing polyamine compound. However, from the viewpoint of more effectively obtaining the effects of the present invention, the content of such other curing agent components in the epoxy resin curing agent (B) is preferably 70% by mass or less, more preferably 50% by mass or less, further preferably 30% by mass or less, still further preferably 15% by mass or less, still further preferably 10% by mass or less, and still further preferably 5% by mass or less, and may be 0% by mass.

The active hydrogen equivalent weight (AHEW) of the epoxy resin curing agent (B) is preferably 130 or less, more preferably 120 or less, and further preferably 110 or less. When the AHEW of the epoxy resin curing agent (B) is 130 or less, high curability is exhibited even if the amount blended in the epoxy resin composition is small. On the other hand, from the viewpoint of forming a coating film having excellent appearance, water resistance, and salt water resistance, the AHEW of the curing agent is preferably 34 or more, more preferably 50 or more, and further preferably 70 or more.

<At least one resin (C) selected from the group consisting of an alkylene oxide adduct of an aromatic hydrocarbon formaldehyde resin and an alkylene oxide adduct of a modified aromatic hydrocarbon formaldehyde resin>

The resin (C) is at least one resin selected from the group consisting of an alkylene oxide adduct of an aromatic hydrocarbon formaldehyde resin and an alkylene oxide adduct of a modified aromatic hydrocarbon formaldehyde resin, and acts as an emulsifier.

(Aromatic hydrocarbon formaldehyde resin)

The aromatic hydrocarbon formaldehyde resin is a resin obtained by reacting an aromatic hydrocarbon and formaldehyde.

Examples of the aromatic hydrocarbon include at least one selected from the group consisting of benzene, toluene, xylene, mesitylene, pseudocumene, ethylbenzene, propylbenzene, decylbenzene, cyclohexylbenzene, biphenyl, methylbiphenyl, naphthalene, methylnaphthalene, dimethylnaphthalene, ethylnaphthalene, anthracene, methylanthracene, dimethylanthracene, ethylanthracene, and binaphthyl. Among these, from the viewpoint of improving emulsifying properties and the viewpoint of forming a coating film having excellent appearance, water resistance, and salt water resistance, at least one selected from the group consisting of toluene, xylene, mesitylene, and pseudocumene is preferred, and xylene is more preferred. That is, the aromatic hydrocarbon formaldehyde resin is preferably at least one selected from the group consisting of a toluene formaldehyde resin obtained by reacting toluene and formaldehyde, a xylene formaldehyde resin obtained by reacting xylene and formaldehyde, a mesitylene formaldehyde resin obtained by reacting mesitylene and formaldehyde, and a pseudocumene formaldehyde resin obtained by reacting pseudocumene and formaldehyde, and including a xylene formaldehyde resin in the aromatic hydrocarbon formaldehyde resin is more preferred.

The content of the xylene formaldehyde resin in the aromatic hydrocarbon formaldehyde resin is, from the viewpoint of improving emulsifying properties and the viewpoint of forming a coating film having excellent appearance, water resistance, and salt water resistance, preferably 50% by mass or more, more preferably 60% by mass or more, further preferably 70% by mass or more, still further preferably 80% by mass or more, still further preferably 90% by mass or more, and still further preferably 95% by mass or more, and is 100% by mass or less.

The weight average molecular weight (Mw) of the aromatic hydrocarbon formaldehyde resin is, from the viewpoint of improving emulsifying properties and the viewpoint of forming a coating film having excellent appearance, water resistance, and salt water resistance, in terms of standard polystyrene, preferably from 200 to 10,000, more preferably from 300 to 8,000, further preferably from 350 to 5,000, still further preferably from 400 to 3,000, still further preferably from 400 to 1,500, and still further preferably from 500 to 1,000. The weight average molecular weight (Mw) can be measured by the method described in the Examples using gel permeation chromatography (GPC).

The viscosity of the aromatic hydrocarbon formaldehyde resin at 25°C is, from the viewpoint of improving emulsifying properties and the viewpoint of forming a coating film having excellent appearance, water resistance, and salt water resistance, preferably from 30 to 30,000 mPa·s, more preferably from 50 to 20,000 mPa·s, further preferably from 100 to 15,000 mPa·s, still further preferably from 300 to 15,000 mPa·s, still further preferably from 500 to 10,000 mPa·s, still further preferably from 1,000 to 10,000 mPa·s, still further preferably from 2,000 to 10,000 mPa·s, and still further preferably from 3,000 to 8,000 mPa·s.

The viscosity can be measured at 25°C using a rotational viscometer.

The hydroxyl group equivalent weight (g/eq) of the aromatic hydrocarbon formaldehyde resin is, from the viewpoint of the addition properties of the alkylene oxide, which are described later, the viewpoint of improving emulsifying properties, and the viewpoint of forming a coating film having excellent appearance, water resistance, and salt water resistance, preferably from 200 to 2,500 g/eq, more preferably from 500 to 2,000 g/eq, further preferably from 800 to 1,800 g/eq, and still further preferably from 1,000 to 1,500 g/eq. The hydroxyl group equivalent weight is determined by measuring the hydroxyl value by the method described in JIS K0070-1992, and converting the hydroxyl value to a hydroxyl group equivalent weight.

The aromatic hydrocarbon formaldehyde resin may be a commercially available product or may be produced by a known method.

Examples of the method for producing the aromatic hydrocarbon formaldehyde resin include the method described in JP 37-5747 B, and the like, in which an aromatic hydrocarbon and formaldehyde are subjected to a condensation reaction in the presence of a catalyst.

Examples of commercially available aromatic hydrocarbon formaldehyde resins include "NIKANOL Y-50", "NIKANOL Y-100", "NIKANOL Y-300", "NIKANOL Y-1000", "NIKANOL L", "NIKANOL LL", "NIKANOL LLL", "NIKANOL G", "NIKANOL H", "NIKANOL H-80", and the like, which are xylene formaldehyde resins manufactured by Fudow Co., Ltd.

(Modified aromatic hydrocarbon formaldehyde resin)

The modified aromatic hydrocarbon formaldehyde resin is a resin obtained by modifying the aromatic hydrocarbon formaldehyde resin with a phenol compound, a polyol compound, and the like. From the viewpoint of improving emulsifying properties and the viewpoint of forming a coating film having excellent appearance, water resistance, and salt water resistance, the modified aromatic hydrocarbon formaldehyde resin used in the present invention is preferably a resin obtained by modifying an aromatic hydrocarbon formaldehyde resin with a phenol compound.

Examples of the phenol compound include the compounds mentioned as examples of "phenolic compound" in the reaction product (b2), and include naturally occurring phenolic compounds such as phenol, alkylphenol, alkenylphenol, terpenephenol, and cardanol. The number of carbon atoms in the alkyl group in the alkylphenol is preferably from 1 to 24, and more preferably from 1 to 18, and the number of carbon atoms in the alkenyl group in the alkenylphenol is preferably from 2 to 24, and more preferably from 2 to 18.

Specific examples of the phenol compound include phenol, cresol, ethylphenol (p-ethylphenol, etc.), isopropylphenol (o-isopropylphenol, p-isopropylphenol, etc.), butylphenol (p-tert-butylphenol, p-sec-butylphenol, o-tert-butylphenol, o-sec-butylphenol, etc.), amylphenol (p-tert-amylphenol, o-tert-amylphenol, etc.), p-octylphenol, nonylphenol, p-cumylphenol, decylphenol, undecylphenol, p-dodecylphenol, tridecylphenol, tetradecylphenol, pentadecylphenol, pentadecenylphenol, pentadecadienylphenol, pentadecatrienylphenol, hexadecylphenol, heptadecylphenol, octadecylphenol, octadecenylphenol, terpene phenol, and cardanol. These can be used alone or in combination of two or more.

Among the above, from the viewpoint of improving emulsifying properties and the viewpoint of forming a coating film having excellent appearance, water resistance, and salt water resistance, the phenol compound is preferably at least one selected from the group consisting of phenol, cresol, butylphenol, and nonylphenol, is more preferably at least one selected from the group consisting of phenol and butylphenol, and is further preferably phenol.

Further, examples of the polyol compound include ethylene glycol, polyethylene glycol, propylene glycol, polypropylene glycol, trimethylolpropane, neopentyl glycol, and the like, and these can be used alone or in combination of two or more.

The modified aromatic hydrocarbon formaldehyde resin can be obtained, for example, by reacting the aromatic hydrocarbon formaldehyde resin with the phenol compound or polyol compound in the presence of an acid or basic catalyst.

A commercially available product can also be used as the modified aromatic hydrocarbon formaldehyde resin. Examples of commercially available aromatic hydrocarbon formaldehyde resins modified with a phenol compound (phenol-modified aromatic hydrocarbon formaldehyde resins) include alkylphenol-modified xylene formaldehyde resins "GHP-150", "HP-210", and "HP-70", phenol-modified (novolac type) xylene formaldehyde resins "NP-100", "GP-212", "P-100", "GP-200", and "HP-30", phenol-modified (resol type) xylene formaldehyde resins "PR-1440M", "PR-1440", and "GRL", which are manufactured by Fudow Co., Ltd. and the like.

Examples of commercially available aromatic hydrocarbon formaldehyde resins modified with a polyol compound (polyol-modified aromatic hydrocarbon formaldehyde resins) include the polyol-modified xylene formaldehyde resin "K-100", manufactured by Fudow Co., Ltd.

(Alkylene oxide)

The resin (C) is an alkylene oxide adduct of the aromatic hydrocarbon formaldehyde resin or modified aromatic hydrocarbon formaldehyde resin.

Examples of the alkylene oxide used in the resin (C) include at least one selected from the group consisting of ethylene oxide, propylene oxide, and butylene oxide, and from the viewpoint of improving emulsifying properties, the alkylene oxide is preferably at least one selected from the group consisting of ethylene oxide and propylene oxide, and is more preferably ethylene oxide.

The amount of the alkylene oxide added to the aromatic hydrocarbon formaldehyde resin or modified aromatic hydrocarbon formaldehyde resin is, from the viewpoint of improving emulsifying properties and the viewpoint of forming a coating film having excellent appearance, water resistance, and salt water resistance, such that the average number of moles of alkylene oxide added, preferably from 5 to 500, more preferably from 10 to 300, further preferably from 15 to 200, still further preferably from 15 to 150, and still further preferably from 20 to 100.

(HLB)

The HLB (Hydrophile-Lipophile Balance) of the resin (C) is, from the viewpoint of improving emulsifying properties and the viewpoint of forming a coating film having excellent appearance, water resistance, and salt water resistance, preferably from 8.0 to 20.0, more preferably from 10.0 to 18.0, and further preferably from 12.0 to 15.0.

Here, HLB is a value indicating the affinity of the emulsifier (resin (C) in the present invention) to water and oil, and

can be determined from the following formula using the Griffin method.

HLB = 20×[(molecular weight of hydrophilic group contained in resin (C))/(molecular weight of resin (C))]

Examples of the hydrophilic group include a hydroxy group, ethylene oxide, and the like.

(Molecular weight and dispersity)

The weight average molecular weight (Mw) of the resin (C) is, from the viewpoint of improving emulsifying properties and the viewpoint of forming a coating film having excellent appearance, water resistance, and salt water resistance, in terms of standard polystyrene, preferably from 300 to 15,000, more preferably from 350 to 12,000, further preferably from 400 to 10,000, still further preferably from 400 to 8,000, still further preferably from 400 to 6,000, still further preferably from 500 to 5,000, still further preferably from 700 to 3,000, and still further preferably from 1,000 to 2,500.

The number average molecular weight (Mn) of the resin (C) is, from the viewpoint of improving emulsifying properties and the viewpoint of forming a coating film having excellent appearance, water resistance, and salt water resistance, in terms of standard polystyrene, preferably from 150 to 10,000, more preferably from 200 to 5,000, further preferably from 250 to 3,000, still further preferably from 300 to 2,000, still further preferably from 300 to 1,500, and still further preferably from 300 to 1,000.

The dispersity (Mw/Mn) of the resin (C) is, from the viewpoint of ease of manufacture, the viewpoint of improving emulsifying properties, and the viewpoint of forming a coating film having excellent appearance, water resistance, and salt water resistance, preferably from 0.8 to 5.0, more preferably from 1.0 to 5.0, further preferably from 1.5 to 4.5, and still further preferably from 2.0 to 3.5.

The weight average molecular weight, number average molecular weight, and dispersity of the resin (C) can be measured by the methods described in the Examples using gel permeation chromatography (GPC).

(Hydroxyl group equivalent weight)

The hydroxyl group equivalent weight of the resin (C) is, from the viewpoint of improving emulsifying properties and the viewpoint of forming a coating film having excellent appearance, water resistance, and salt water resistance, preferably from 300 to 6,000 g/eq, more preferably from 500 to 5,000 g/eq, further preferably from 500 to 4,000 g/eq, still further preferably from 800 to 3,000 g/eq, still further preferably from 1,000 to 2,500 g/eq, still further preferably from 1,200 to 2,500 g/eq, and still further preferably from 1,500 to 2,000 g/eq. The hydroxyl group equivalent weight is determined in the same manner as described above by measuring the hydroxyl value by the method described in JIS K0070-1992, and converting the hydroxyl value to a hydroxyl group equivalent weight.

The resin (C) is obtained by reacting the above-described aromatic hydrocarbon formaldehyde resin or modified aromatic hydrocarbon formaldehyde resin with an alkylene oxide under a basic catalyst under heating and pressure. More specifically, the aromatic hydrocarbon formaldehyde resin or the modified aromatic hydrocarbon formaldehyde resin and a basic catalyst are charged into a reactor equipped with a heating and pressurizing mechanism such as an autoclave, the alkylene oxide is fed into the reactor, and a reaction is carried out under heating and pressure.

**In** the reaction, the amount of the alkylene oxide used with respect to 100 parts by mass of the aromatic hydrocarbon formaldehyde resin or the modified aromatic hydrocarbon formaldehyde resin is, from the viewpoint of improving emulsifying properties and the viewpoint of forming a coating film having excellent appearance, water resistance, and salt water resistance, preferably from 10 to 800 parts by mass, more preferably from 15 to 500 parts by mass, further preferably from 20 to 300 parts by mass, still further preferably from 30 to 200 parts by mass, and still further preferably from 50 to 150 parts by mass. That is, the resin (C) is obtained by reacting, with respect to 100 parts by mass of the aromatic hydrocarbon formaldehyde resin or the modified aromatic hydrocarbon formaldehyde resin, preferably from 10 to 800 parts by mass, more preferably from 15 to 500 parts by mass, further preferably from 20 to 300 parts by mass, still further preferably from 30 to 200 parts by mass, and still further preferably from 50 to 150 parts by mass, of the alkylene oxide.

As the basic catalyst used in the reaction, either an inorganic base or an organic base can be used. Examples of the inorganic base include an alkali metal hydroxide such as potassium hydroxide and sodium hydroxide, and examples of the organic base include an alkali metal alkoxide such as potassium methoxide and sodium methoxide, and an amine such as triethylamine. These can be used alone or in combination of two or more.

Among the above-described basic catalysts, from the viewpoint of improving reaction efficiency and the viewpoint of economy, an inorganic base is preferred, and an alkali metal hydroxide is more preferred.

The reaction temperature in the reaction is, from the viewpoint of improving reaction efficiency, preferably from 100 to 190°C, and more preferably from 140 to 190°C. The reaction time varies depending on the amount of the alkylene

oxide used, but is preferably from 1 to 30 hours, more preferably from 2 to 15 hours, and further preferably from 3 to 12 hours. As used herein, the reaction time includes the feeding time of the alkylene oxide.

The pressure during the reaction is preferably higher than ordinary pressure (1 atm; 0.1013 MPa), and is preferably in the range of 0.12 to 5 MPa, more preferably 0.15 to 2 MPa, and further preferably 0.15 to 1 MPa.

<Water>

As the water used in the composition of the present invention, distilled water, purified water such as ion exchange water (deionized water), tap water, industrial water, and the like can be used.

<Content>

The content or content ratio of each component in the emulsion-type epoxy resin composition is preferably in the following ranges.

The ratio between the epoxy resin (A) and the epoxy resin curing agent (B) in the emulsion-type epoxy resin composition is, from the viewpoint of curability and the viewpoint of forming a coating film having excellent appearance, water resistance, and salt water resistance, set such that the ratio between the number of active hydrogens in the epoxy resin curing agent (B) and the number of epoxy groups in the epoxy resin (A), that is, [number of active hydrogens/number of epoxy groups] is preferably from 1/0.8 to 1/1.2, more preferably from 1/0.9 to 1/1.1, and further preferably 1/1.

The content of the epoxy resin (A) in the emulsion-type epoxy resin composition is, from the viewpoint of forming a coating film having excellent appearance, water resistance, and salt water resistance, preferably from 10 to 70% by mass, more preferably from 20 to 70% by mass, and further preferably from 30 to 50% by mass.

Further, the content of the epoxy resin (A) in the solid portion of the emulsion-type epoxy resin composition is, from the viewpoint of forming a coating film having excellent appearance, water resistance, and salt water resistance, preferably from 30 to 80% by mass, more preferably from 40 to 70% by mass, and further preferably from 50 to 70% by mass. As used herein, "solid portion of the emulsion-type epoxy resin composition" is the amount excluding water and the organic solvent from the total amount of the emulsion-type epoxy resin composition.

The content of the epoxy resin curing agent (B) in the emulsion-type epoxy resin composition is, from the viewpoint of curability and the viewpoint of forming a coating film having excellent appearance, water resistance, and salt water resistance, preferably from 3 to 50% by mass, more preferably from 5 to 30% by mass, and further preferably from 10 to 25% by mass.

The content of the epoxy resin curing agent (B) in the solid portion of the emulsion-type epoxy resin composition is, from the viewpoint of curability and the viewpoint of forming a coating film having excellent appearance, water resistance, and salt water resistance, preferably from 10 to 60% by mass, more preferably from 15 to 50% by mass, further preferably from 15 to 40% by mass, and still further preferably from 20 to 35% by mass.

The content of the resin (C) in the emulsion-type epoxy resin composition is, from the viewpoint of improving emulsifying properties and the viewpoint of forming a coating film having excellent appearance, water resistance, and salt water resistance, with respect to 100 parts by mass in total of the epoxy resin (A), the epoxy resin curing agent (B), and the resin (C), preferably from 1 to 20 parts by mass, more preferably from 2 to 20 parts by mass, further preferably from 3 to 18 parts by mass, still further preferably from 5 to 15 parts by mass, still further preferably from 7 to 15 parts by mass, and still further preferably from 7 to 12 parts by mass.

The water content in the emulsion-type epoxy resin composition is, from the viewpoint of improving emulsifying properties and the viewpoint of adjusting the viscosity to a desired range, preferably from 5 to 85% by mass, more preferably from 10 to 80% by mass, further preferably from 20 to 70% by mass, and still further preferably from 30 to 60% by mass.

Other components, such as known curing accelerators, non-reactive diluents, fillers, modifying components such as plasticizers, and flow control components such as thixotropic agents, pigments, leveling agents, and tackifiers may further be blended with the composition of the present invention, within a range not impairing the effects of the present invention.

Of these, examples of the curing accelerator include tris(dimethylaminomethyl)phenol, benzyl alcohol, salicylic acid, triphenyl phosphite, styrenated phenol, bisphenol A, N,N'-bis(3-(dimethylamino)propyl)urea, and mercaptan-terminated polysulfide compounds such as "Thiokol LP-3" (manufactured by Toray Fine Chemicals Co., Ltd.).

However, the total content of the epoxy resin (A), epoxy resin curing agent (B), resin (C), and water in the emulsion-type epoxy resin composition is preferably 50% by mass or more, more preferably 60% by mass or more, further preferably 70% by mass or more, still further preferably 80% by mass or more, still further preferably 90% by mass or more, and still further preferably 95% by mass or more, and is 100% by mass or less.

Further, the composition of the present invention preferably does not contain an organic solvent, and the content of an organic solvent is preferably 10% by mass or less, more preferably 5% by mass or less, and further preferably 2% by

mass or less, and the lower limit is 0% by mass.

<Viscosity>

The viscosity of the emulsion-type epoxy resin composition at 25°C is, from the viewpoint of improving emulsifying properties and the viewpoint of forming a coating film having good appearance, preferably 500 mPa·s or less, more preferably 400 mPa·s or less, further preferably 350 mPa·s or less, and still further preferably 300 mPa·s or less. Moreover, from the viewpoint of facilitating the formation of a coating film having a desired thickness, the viscosity is preferably 50 mPa·s or more, and more preferably 100 mPa·s or more.

The viscosity of the emulsion-type epoxy resin composition at 25°C can be measured using a rotational viscometer, specifically by the method described in the Examples.

[Method for producing emulsion-type epoxy resin composition]

The method for producing the emulsion-type epoxy resin composition is not particularly limited, but from the viewpoint of obtaining a composition having good emulsifying properties and the viewpoint of ease of emulsification, it is preferred to produce the emulsion-type epoxy resin composition by a method including the step of preparing a mixture containing the epoxy resin (A), the epoxy resin curing agent (B), and the resin (C), and then mixing the mixture with water. According to this method, an emulsified epoxy resin composition can be easily prepared without performing mechanical high-speed stirring or the like.

In the method for producing the emulsion-type epoxy resin composition of the present invention (hereinafter also simply referred to as "the production method of the present invention"), first, a mixture containing the epoxy resin (A), the epoxy resin curing agent (B), and the resin (C) is prepared. Examples of the method for preparing the mixture include blending the epoxy resin (A), the epoxy resin curing agent (B), the resin (C), and preferably a part of the water to be blended into the composition, and then using a known method and device to mix.

The amount of water used when preparing the mixture does not need to be the entire amount of water to be blended into the composition, and is preferably from 10 to 50% by mass, and more preferably 20 to 40% by mass, of the water to be blended into the final composition.

When preparing the mixture, the order in which the epoxy resin (A), the epoxy resin curing agent (B), the resin (C), and water are blended is not particularly limited, and all the components may be blended and mixed at the same time.

The temperature during preparation of the mixture may be room temperature, and is usually in the range of from 0 to 40°C, and preferably from 10 to 35°C. The mixing time during the mixture preparation is also not particularly limited, and is usually selected within the range of from 0.5 minutes to 6 hours.

After preparing the mixture, the mixture and the remaining amount of water are mixed to obtain the emulsion-type epoxy composition of the present invention. The preferred ranges of the mixing temperature and mixing time at this time are also the same as above.

[Paint]

The paint of the present invention includes the emulsion-type epoxy resin composition. The emulsion-type epoxy resin composition of the present invention has good emulsifying properties and also has excellent appearance, water resistance, and salt water resistance when used for a coating film, and thus can be suitably used in various paints such as a corrosion-resistant paint.

The content of the emulsion-type epoxy resin composition in the paint is, from the viewpoint of forming a coating film having excellent appearance, water resistance, and salt water resistance, preferably 50% by mass or more, more preferably 70% by mass or more, further preferably 80% by mass or more, and still further preferably 90% by mass or more, and is 100% by mass or less.

<Cured product>

A cured product of the emulsion-type epoxy resin composition is obtained by curing the composition or paint of the present invention by a known method. The curing conditions of the emulsion-type epoxy resin composition are appropriately selected according to the use and form, and are not particularly limited.

The form of the cured product is also not particularly limited, and may be selected according to the use. For example, when the emulsion-type epoxy resin composition is for various paint uses, the cured product is usually a film-like cured product.

<Use>

The emulsion-type epoxy resin composition of the present invention has good emulsifying properties as well as excellent appearance, water resistance, and salt water resistance when used for a coating film, and thus can be suitably used in various paints such as a corrosion-resistant paint, as well as for an adhesive, a floor material, a sealant, a polymer cement mortar, a gas barrier coating, a primer, a screed, a top coat, a sealing material, a crack repair material, a road paving material, and the like.

Examples

Hereinafter, the present invention will be described in detail with reference to Examples and Comparative Examples, but the present invention is not limited to the following Examples. Further, the emulsion-type epoxy resin composition was evaluated by the following methods.

(Viscosity measurement)

The viscosity of the emulsion-type epoxy resin composition at 25°C was measured using an E-type viscometer "TVE-22H-type viscometer cone plate type" (manufactured by Toki Sangyo Co., Ltd.).

(Molecular weight measurement)

The weight average molecular weight (Mw) of the aromatic hydrocarbon formaldehyde resin, and the weight average molecular weight (Mw), number average molecular weight (Mn), and dispersity (Mw/Mn) of an ethylene oxide adduct thereof (resin (C)) were measured by gel permeation chromatography (GPC) using polystyrene as a standard substance under the following conditions.

<GPC measurement conditions>

Apparatus: Shodex GPC-101 type (manufactured by Showa Denko K.K.)
Column: Shodex LF-804 × 3 (manufactured by Showa Denko K.K.)
Eluent: Tetrahydrofuran
Flow rate: 1.0 mL/min.
Column temperature: 40°C
Detector: RI (differential refraction detector)

(Emulsifying properties)

The appearance of the emulsion-type epoxy resin composition obtained in each example was visually observed, and the emulsification state was evaluated by the following criteria. A grade of "A" or "B" is considered a pass.

<Evaluation criteria>

A: Excellent (no oil droplet separation or the like)
B: Fair (oil droplet separation is seen, but no severe separation)
C: Poor (severe separation)

(Coating film appearance)

The emulsion-type epoxy resin composition of each example was applied using an applicator onto a base material (zinc phosphate-treated iron plate, "SPCC-SD PB-N144" manufactured by Paltech Co., Ltd., 0.8 × 70 × 150 mm) under conditions of 23°C and 50% R. H. to form a coating film (coating film thickness immediately after application: 100 μm or 200 μm). The appearance of the coating film obtained one week after application was visually observed, and the smoothness was evaluated by the following criteria.

<Evaluation criteria>

Ex: Excellent (there is no unevenness)
G: Good (there is slight unevenness, but there is no problem with use)
F: Fair (there is some unevenness)
P: Poor (there is cissing or unevenness on the whole surface)

(Water resistance spot test)

The emulsion-type epoxy resin composition of each example was applied using an applicator onto a base material (zinc phosphate-treated iron plate) in the same manner as described above to form a coating film. This coating film was kept under the conditions of 23°C and 50% R.H., and after 1, 2, and 7 days passed, 2 to 3 drops of pure water were dropped on the surface of the coating film with a dropper, and the portion was covered with a 50 mL screw tube bottle. After 24 hours passed, water was wiped off, and the appearance was visually observed and evaluated according to the following criteria.

Ex: Excellent (no change at all)
G: Good (slight change, but no problem with use)
F: Fair (some whitening)
P: Poor (whitening)

(5% Salt water spray test)

The emulsion-type epoxy resin composition of each example was applied onto a base material (zinc phosphate-treated iron plate) in the same manner as described above to form a coating film (coating film thickness immediately after application: 100 μm or 200 μm), and a test specimen was produced by sealing the non-applied part with a rust preventive paint (Million Primer and Million Clear, manufactured by Kansai Paint Co., Ltd.). This test specimen was kept under the conditions of 23°C and 50% R.H., and after 14 days passed, two diagonally intersecting cuts of 50 mm in length were cut in accordance with JIS K5600-7-9:2006 into the surface of the coating film using a cutter knife to produce a test specimen.

The test specimen was placed in a salt water spray tester ("STP-90" manufactured by Suga Test Instruments Co., Ltd., in-bath temperature 35°C), and continuously sprayed with salt water (concentration 5% by mass). The appearance of the test specimen was visually observed after 1 week (in Example 1 and Comparative Example 1, after 1, 2, and 4 weeks), and evaluated according to the following criteria. Further, the presence or absence of spot rust was checked by visually observing the surface of the base material in contact with the coating film. A grade of "A" or "B" is considered a pass.

<Evaluation criteria>

A: No spot rust on the base material and no change in coating film appearance
B: A small amount of spot rust on the base material, but there is no problem with use
C: There is spot rust on the base material, or the coating film has separated

Production Example 1 (Production of Mannich reaction product (b2) of phenol-formaldehyde-metaxylylenediamine (MXDA))

A 2-liter flask equipped with a stirring device, a thermometer, a nitrogen inlet tube, a dropping funnel, and a cooling tube was charged with 612.9 g (4.5 mol) of metaxylylenediamine (Mitsubishi Gas Chemical Company, Inc., MXDA) and 423.45 g (4.5 mol) of phenol, and the temperature was raised to 80°C with stirring under a nitrogen stream. Next, 365.2 g (4.5 mol) of formalin (37% aqueous solution containing 8% methanol) was added dropwise at 80°C over 1.5 hours, after the dropwise addition was complete, the temperature was raised to 100°C and the reaction was carried out for 1.5 hours. The temperature was raised to 150°C over 2 hours while water was distilled off, and the reaction was carried out at the same temperature for 1 hour to obtain a Mannich reaction product (b2) of phenol-formaldehyde-metaxylylenediamine (MXDA).

Production Example 2 (Production of Mannich reaction product (b2') of phenol-formaldehyde-isophoronediamine (IPDA))

A Mannich reaction product (b2') of phenol-formaldehyde-isophoronediamine (IPDA) was obtained by performing a reaction in the same manner as in Production Example 1, except that 766.35 g (4.5 mol) of isophoronediamine (IPDA) was used instead of the metaxylylenediamine used in Production Example 1.

Production Example 3(Production of ethylene oxide (EO) adduct of a xylene formaldehyde resin)

A stainless steel autoclave equipped with a stirring device, a nitrogen inlet tube, a cooling tube, and an alkylene oxide inlet tube was charged with 100 g of xylene formaldehyde resin "NIKANOL LL" (hydroxyl group equivalent weight 1320 g/eq) manufactured by Fudow Co., Ltd., and 0.1 g of potassium hydroxide. To this, 100 g of ethylene oxide was fed and a reaction was carried out at a reaction temperature of 150 to 170°C and a pressure of 2 atm (0.20 MPa) for 6 hours to obtain an EO adduct of a xylene formaldehyde resin.

The obtained resin had a hydroxyl value of 30 mgKOH/g (hydroxyl group equivalent weight of 1870 g/eq), Mn of 600, Mw of 1700, and Mw/Mn of 2.83.

Example 1 (production of emulsion-type epoxy resin composition)

As the epoxy resin (A), a liquid epoxy resin having a glycidyloxy group derived from bisphenol A ("jER828" manufactured by Mitsubishi Chemical Corporation, epoxy equivalent weight: 186 g/eq) was used as the main agent, and as the epoxy resin curing agent (B), the Mannich reaction product (b2) of phenol-formaldehyde-metaxylylenediamine (MXDA) obtained in Production Example 1 was used.

The above-described curing agent was blended with the epoxy resin as the main agent in the proportion shown in Table 1 so that the number of active hydrogens in the curing agent and the number of epoxy groups in the epoxy resin were equimolar. Further, the EO adduct of a xylene formaldehyde resin obtained in Production Example 3 was blended in the amount shown in Table 1, and a mixture was prepared by adding 30% by mass of the amount of water shown in Table 1 (12% by mass of the total amount of the final composition) and stirring at room temperature (25°C). Next, the remaining amount of the water (28% by mass of the total amount of the final composition) was added, and the mixture was stirred at room temperature to obtain an emulsion-type epoxy resin composition.

The evaluations described above were performed on the obtained emulsion-type epoxy resin composition. The results are shown in Table 1.

Examples 2 to 4 and Comparative Examples 1 to 3

Emulsion-type epoxy resin compositions were prepared and the evaluations described above were performed in the same manner as in Example 1, except that the types and amounts of the components used were changed as shown in Table 1. The results are shown in Table 1. All of the amounts listed in Table 1 are effective component amounts.

Table 1

| | | | Example 1 | Example 2 | Example 3 | Example 4 | Comparative Example 1 | Comparative Example 2 | Comparative Example 3 |
|---|---|---|---|---|---|---|---|---|---|
| Composition blend | Epoxy resin (A) | jER828 (% by mass) | 38.12 | 34.75 | 40.25 | 36.02 | 38.13 | 34.75 | 36.49 |
| | Epoxy resin curing agent (B) | (b2) Phenol-formaldehyde-MXDA Mannich reaction product (% by mass) | 15.88 | | 16.75 | 14.98 | 15.87 | | |
| | | (b3) Styrene-MXDA reaction product (% by mass) | | 19.25 | | | | 19.25 | |
| | | (b2') Phenol-formaldehyde-IPDA Mannich reaction product (% by mass) | | | | | | | 17.51 |
| | Resin (C) | EO adduct of a xylene formaldehyde resin (% by mass) | 6.00 | 6.00 | 3.00 | 9.00 | | | 6.00 |
| | Emulsifier (C') | EA-207D (% by mass) | | | | | 10.91 | | |
| | | GX-5170 (% by mass) | | | | | | 6.00 | |
| | Water (% by mass) | | 40.00 | 40.00 | 40.00 | 40.00 | 35.09 | 40.00 | 40.00 |
| | Total (% by mass) | | 100.00 | 100.00 | 100.00 | 100.00 | 100.00 | 100.00 | 100.00 |
| Content of resin (C) or (C') with respect to 100 parts by mass in total of epoxy resin (A), epoxy resin curing agent (B), and resin (C) or (C') (parts by mass) | | | 10.00 | 10.00 | 5.00 | 15.00 | 16.81 | 10.00 | 10.00 |
| Number of active hydrogens in curing agent / number of epoxy groups in epoxy resin | | | 1/1 | 1/1 | 1/1 | 1/1 | 1/1 | 1/1 | 1/1 |
| Viscosity of composition (25°C, unit mPa·s) | | | 270 | 140 | 310 | 230 | 160 | 700 | 640 |
| Evaluation results | Emulsifying properties | | A | A | B | A | A | C | C |
| | Coating film appearance | Smoothness | G | G | F | G | G | P | P |
| | Water resistance spot (after 1/2/7 days) | | G/G/G | Ex/Ex/Ex | G/G/G | F/F/G | G/G/G | | |
| | 5% Salt water spray | 1w | A | A | A | B | C | | |
| | | 2w | A | | | | C | | |
| | | 4w | A | | | | C | | |

The components listed in the table are as follows.

<Epoxy resin (A)>

- jER828: Liquid epoxy resin having a glycidyloxy group derived from bisphenol A, "jER828" manufactured by Mitsubishi Chemical Corporation, epoxy equivalent weight 186g/eq

<Epoxy resin curing agent (B)>

- (b2) Phenol-formaldehyde-MXDA Mannich reaction product: Mannich reaction product of phenol-formaldehyde-metaxylylenediamine (MXDA) obtained in Production Example 1, AHEW of 77

- (b3) Styrene-MXDA reaction product: Reaction composition containing a product of reaction between styrene and metaxylylenediamine (MXDA), "Gaskamine 240" manufactured by Mitsubishi Gas Chemical Company, Inc., AHEW of 103
- (b2') Phenol-formaldehyde-IPDA Mannich reaction product: Mannich reaction product of phenol-formaldehyde-isophoronediamine (IPDA) obtained in Production Example 2, AHEW of 89

<Resin (C)>

- EO adduct of a xylene formaldehyde resin: EO adduct of a xylene formaldehyde resin obtained in Production Example 3, HLB of 13.2

<Emulsifier (C')>

- EA-207D: Polyoxyethylene styrenated phenyl ether, "Noigen EA-207D" manufactured by Daiichi Kogyo Seiyaku Co., Ltd., HLB of 12.7
- GX-5170: Cardanol emulsifier, "Cardolite GX-5170" manufactured by Cardolite, HLB of 12.8

As shown in Table 1, the emulsion-type epoxy resin composition of the present invention had good emulsifying properties, as well as good appearance, water resistance, and salt water resistance when used for a coating film (Examples 1 to 4). On the other hand, in Comparative Examples 1 and 2, which used an emulsifier outside the specified range of the present invention, and Comparative Example 3, which used an epoxy resin curing agent that did not contain an aromatic ring-containing polyamine compound or a modified product thereof, the results showed that emulsifying properties, appearance, or salt water resistance when used for a coating film was poor.

Industrial Applicability

According to the present invention, it is possible to provide an emulsion-type epoxy resin composition that has good emulsifying properties and excellent appearance, water resistance, and salt water resistance when used for a coating film, and a method for producing the same. This epoxy resin composition can be suitably used in various paints, such as a corrosion-resistant paint.

## Claims

**1.** An emulsion-type epoxy resin composition comprising:

an epoxy resin (A);
an epoxy resin curing agent (B) comprising an aromatic ring-containing polyamine compound or a modified product thereof;
at least one resin (C) selected from the group consisting of an alkylene oxide adduct of an aromatic hydrocarbon formaldehyde resin and an alkylene oxide adduct of a modified aromatic hydrocarbon formaldehyde resin; and water.

**2.** The emulsion-type epoxy resin composition according to claim 1, wherein the aromatic ring-containing polyamine compound or modified product thereof is at least one selected from the group consisting of a polyamine compound (b1) represented by the following formula (1), a Mannich reaction product (b2) of a phenolic compound, an aldehyde compound, and the polyamine compound represented by the following formula (1), and a reaction product (b3) of styrene and the polyamine compound represented by the following formula (1):

$$H_2N\text{-}CH_2\text{-}A\text{-}CH_2\text{-}NH_2 \qquad (1)$$

wherein A is a 1,2-phenylene group, a 1,3-phenylene group, or a 1,4-phenylene group.

**3.** The emulsion-type epoxy resin composition according to claim 1 or 2, wherein the modified aromatic hydrocarbon

formaldehyde resin is a resin obtained by modifying an aromatic hydrocarbon formaldehyde resin with a phenol compound.

4. The emulsion-type epoxy resin composition according to claim 3, wherein the phenol compound is at least one selected from the group consisting of phenol, cresol, butylphenol, and nonylphenol.

5. The emulsion-type epoxy resin composition according to any one of claims 1 to 4, wherein the aromatic hydrocarbon is at least one selected from the group consisting of toluene, xylene, mesitylene, and pseudocumene.

6. The emulsion-type epoxy resin composition according to any one of claims 1 to 5, wherein a content of the resin (C) in the emulsion-type epoxy resin composition is from 1 to 20 parts by mass with respect to 100 parts by mass in total of the epoxy resin (A), the epoxy resin curing agent (B), and the resin (C).

7. The emulsion-type epoxy resin composition according to any one of claims 1 to 6, wherein the emulsion-type epoxy resin composition has a viscosity at 25°C of 500 mPa·s or less,
the viscosity being measured, as described in the example part of the description.

8. A paint comprising the emulsion-type epoxy resin composition according to any one of claims 1 to 7.

9. A method for producing the emulsion-type epoxy resin composition according to any one of claims 1 to 7, comprising a step of preparing a mixture comprising the epoxy resin (A), the epoxy resin curing agent (B), and the resin (C), and then mixing the mixture with water.

## Patentansprüche

1. Emulsionsartige Epoxidharzzusammensetzung, umfassend:

   ein Epoxidharz (A);
   ein Epoxidharz-Härtungsmittel (B), das eine aromatische Ringe enthaltende Polyaminverbindung oder ein modifiziertes Produkt davon umfasst;
   mindestens ein Harz (C), ausgewählt aus der Gruppe, bestehend aus einem Alkylenoxid-Addukt eines aromatischen Kohlenwasserstoff-Formaldehyd-Harzes und einem Alkylenoxid-Addukt eines modifizierten aromatischen Kohlenwasserstoff-Formaldehyd-Harzes; und
   Wasser.

2. Emulsionsartige Epoxidharzzusammensetzung nach Anspruch 1, wobei die aromatische Ringe enthaltende Polyaminverbindung oder ein modifiziertes Produkt davon mindestens eine ist, ausgewählt aus der Gruppe bestehend aus einer Polyaminverbindung (b1), dargestellt durch die folgende Formel (1), einem Mannich-Reaktionsprodukt (b2) einer Phenolverbindung, einer Aldehydverbindung und einer Polyaminverbindung, dargestellt durch die folgende Formel (1), und einem Reaktionsprodukt (b3) aus Styrol und der Polyaminverbindung, dargestellt durch die folgende Formel (1):

$$H_2N\text{-}CH_2\text{-}A\text{-}CH_2\text{-}NH_2 \qquad (1)$$

wobei A eine 1,2-Phenylengruppe, eine 1,3-Phenylengruppe oder eine 1,4-Phenylengruppe ist.

3. Emulsionsartige Epoxidharzzusammensetzung nach Anspruch 1 oder 2, wobei das modifizierte aromatische Kohlenwasserstoff-Formaldehydharz ein Harz ist, das durch Modifizieren eines aromatischen Kohlenwasserstoff-Formaldehydharzes mit einer Phenolverbindung erhalten wird.

4. Emulsionsartige Epoxidharzzusammensetzung nach Anspruch 3, wobei die Phenolverbindung mindestens eine ist, die aus der Gruppe ausgewählt ist, die aus Phenol, Kresol, Butylphenol und Nonylphenol besteht.

5. Emulsionsartige Epoxidharzzusammensetzung nach einem der Ansprüche 1 bis 4, wobei der aromatische Kohlenwasserstoff mindestens einer aus der Gruppe, bestehend aus Toluol, Xylol, Mesitylen und Pseudocumen ist.

6. Emulsionsartige Epoxidharzzusammensetzung nach einem der Ansprüche 1 bis 5, wobei der Gehalt des Harzes (C)

in der emulsionsartigen Epoxidharzzusammensetzung 1 bis 20 Masseteile, bezogen auf 100 Masseteile des Epoxidharzes (A), des Epoxidharzhärters (B) und des Harzes (C) insgesamt, beträgt.

7. °Emulsionsartige Epoxidharzzusammensetzung nach einem der Ansprüche 1 bis 6, wobei die emulsionsartige Epoxidharzzusammensetzung eine Viskosität bei 25 °C von 500 mPa · s oder weniger aufweist,
wobei die Viskosität wie im Beispielteil der Beschreibung gemessen wird.

8. Farbe, die die emulsionsartige Epoxidharzzusammensetzung gemäß einem der Ansprüche 1 bis 7 umfasst.

9. Verfahren zur Herstellung der Emulsions-Epoxidharzzusammensetzung gemäß einem der Ansprüche 1 bis 7, umfassend einen Schritt des Herstellens einer Mischung, die das Epoxidharz (A), das Epoxidharz-Härtungsmittel (B) und das Harz (C) umfasst, und anschließendes Mischen der Mischung mit Wasser.

## Revendications

1. Composition de résine époxy de type émulsion comprenant :

   une résine époxy (A) ;
   un agent de durcissement de résine époxy (B), comprenant un composé polyamine contenant un cycle aromatique ou un produit modifié de celui-ci ;
   au moins une résine (C), choisie dans le groupe constitué par un produit d'addition d'oxyde d'alkylène d'une résine formaldéhyde d'hydrocarbure aromatique, et un produit d'addition d'oxyde d'alkylène d'une résine formaldéhyde d'hydrocarbure aromatique modifiée ; et
   de l'eau.

2. La composition de résine époxy de type émulsion selon la revendication 1, dans laquelle le composé polyamine contenant un cycle aromatique, ou le produit modifié de celui-ci, est au moins un, choisi dans le groupe constitué par un composé polyamine (b1) représenté par la formule (1) suivante, un produit de réaction de Mannich (b2) d'un composé phénolique, d'un composé aldéhyde et du composé polyamine représenté par la formule (1) suivante, et un produit de réaction (b3) du styrène et du composé polyamine représenté par la formule (1) suivante :

$$H_2N\text{-}CH_2\text{-}A\text{-}CH_2\text{-}NH_2 \qquad (1)$$

dans laquelle A est un groupe 1,2-phénylène, un groupe 1,3-phénylène ou un groupe 1,4-phénylène.

3. La composition de résine époxy de type émulsion selon la revendication 1 ou 2, dans laquelle la résine formaldéhyde d'hydrocarbure aromatique modifiée est une résine obtenue en modifiant une résine formaldéhyde d'hydrocarbure aromatique avec un composé phénolique.

4. La composition de résine époxy de type émulsion selon la revendication 3, dans laquelle le composé phénolique est au moins un choisi dans le groupe constitué par le phénol, le crésol, le butylphénol et le nonylphénol.

5. La composition de résine époxy de type émulsion selon l'une quelconque des revendications 1 à 4, dans laquelle l'hydrocarbure aromatique est au moins un choisi dans le groupe constitué par le toluène, le xylène, le mésitylène et le pseudocumène.

6. La composition de résine époxy de type émulsion selon l'une quelconque des revendications 1 à 5, dans laquelle la teneur de la résine (C) dans la composition de résine époxy de type émulsion est de 1 à 20 parties en masse par rapport à 100 parties en masse au total de la résine époxy (A), de l'agent de durcissement de la résine époxy (B) et de la résine (C).

7. La composition de résine époxy de type émulsion selon l'une quelconque des revendications 1 à 6, dans laquelle la composition de résine époxy de type émulsion a une viscosité à 25 °C de 500 mPa·s ou moins,
la viscosité étant mesurée comme décrit dans la partie exemple de la description.

8. Peinture comprenant la composition de résine époxy de type émulsion selon l'une quelconque des revendications 1 à 7.

**9.** Procédé de production de la composition de résine époxy de type émulsion selon l'une quelconque des revendications 1 à 7, comprenant une étape de préparer un mélange comprenant la résine époxy (A), l'agent de durcissement de résine époxy (B) et la résine (C), et puis mélanger le mélange avec de l'eau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2018096868 A
- CN 111286255 A
- US 2019256645 A1
- JP 375747 B

### Non-patent literature cited in the description

- **EA-207D**. Polyoxyethylene styrenated phenyl ether, ''Noigen EA-207D. Daiichi Kogyo Seiyaku Co., Ltd
- **GX-5170**. Cardanol emulsifier, ''Cardolite GX-5170. Cardolite